# EUROPEAN PATENT SPECIFICATION

(11) **EP 2 472 217 B1**
(45) Date of publication and mention of the grant of the patent: **04.12.2013**
(21) Application number: 11010311.6
(22) Date of filing: 31.12.2011
(51) Int. Cl.: G01B 5/00, G01B 5/22, G01B 21/20

(54) **Device for positioning a spherical component during measurement of form errors**
Vorrichtung zur Positionierung einer kugelförmigen Komponente während der Messung von Formabweichungen
Dispositif pour positionner une composante sphèrique pendant la mesure d'erreurs de forme

(30) Priority: 31.12.2010 PL 39354910
(43) Date of publication of application: 04.07.2012
(73) Proprietor: Politechnika Swietokrzyska, 25-314 Kielce (PL)
(72) Inventor: Adamczak, Stanislaw, 25-213 Kielce (PL); Balek, Pavel, 61500 Brno (CZ); Janecki, Dariusz, 25-750 Kielce (PL); Kur, Boris, 61500 Brno (CZ)
(74) Representative: Garstka, Antoni Czeslaw

(56) References cited:
- US-A- 3 315 367
- US-A- 3 319 163
- US-A- 4 414 748
- US-A- 5 131 159
- US-A1- 2002 011 005

## Description

The present invention relates to a device for positioning a spherical component during measurement of form errors.

In the solutions known from the state of the art, measurement of a spherical component involves placing it on three balls, whose diameters are smaller than that of the spherical component, as described, for example, in published US Patent No. 3315367, or in a conical socket, as disclosed, for instance, in published US Patent No. 3319163. Another option is to use a ring-shaped support. These support elements make measurement easier; however, for measurement to be complete and reliable, it is required that it be performed in precisely determined cross-sections.

Moreover, published US Patent No. 4414748 discloses a device for positioning a sphere in a shape measurement. The device comprises, a platform, an aligning ring, a lifting mechanism, two vacuum chucks each having a conical socket, and a support on an aligning pin fixed in the aligning ring.

The present invention provides a device for positioning a spherical component during measurement of form errors, the device comprising a platform, pivotally mounted on an aligning ring, and a lifting mechanism for lifting a spherical component, fixed to the platform and coupled to a gripping mechanism, equipped with a pair of jaws, wherein one of the jaws has a rotating mechanism for positioning the spherical component by rotating it about a predetermined angle, and the device further comprising a support on which the spherical component can be placed, the support being mounted on an aligning pin fixed in the aligning ring.

The rotating mechanism preferably includes a pawl module, which cooperates with pitched positioning grooves on the face of an angle-adjusting ring. Preferably, the pitch of the positioning grooves is 30° or 22.5°. The support preferably possesses three forked claws with flat inner surfaces circumscribed about a conical surface

Preferably, the aligning ring, mounted on the positioning pin of the measuring table, the aligning pin, on which the support is fixed, and the spherical component are in alignment. The platform preferably has a radial recess and a channel for stabilizing its position with respect to the aligning ring, wherein the recess and the channel cover one quarter of the circumference of the circular platform.

Preferably, the jaws for gripping a spherical component are equipped with non-slip tips.

The device, according to the present invention, enables controlled measurements of roundness in several predetermined cross-sections, i.e. meridian measurements, performed in planes perpendicular to the central axis of the spherical component, and, then, equatorial measurements, conducted in the planes going through the centre of the spherical component, which are perpendicular to the meridian measurements.

The device can be easily fixed on instruments for non-reference measurement of roundness, which are equipped with sensors to visualize a profile of a measured form.

Hereinafter, the embodiments of the present invention will be described in detail with reference to the accompanying drawings:

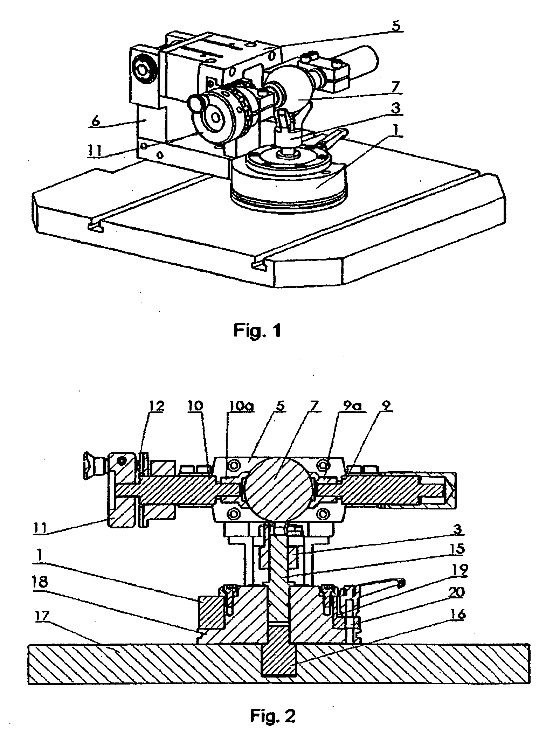

FIG. 1 shows a view of the device mounted on the measuring table;
FIG. 2 shows a cross-section of the device with the rotating mechanism;

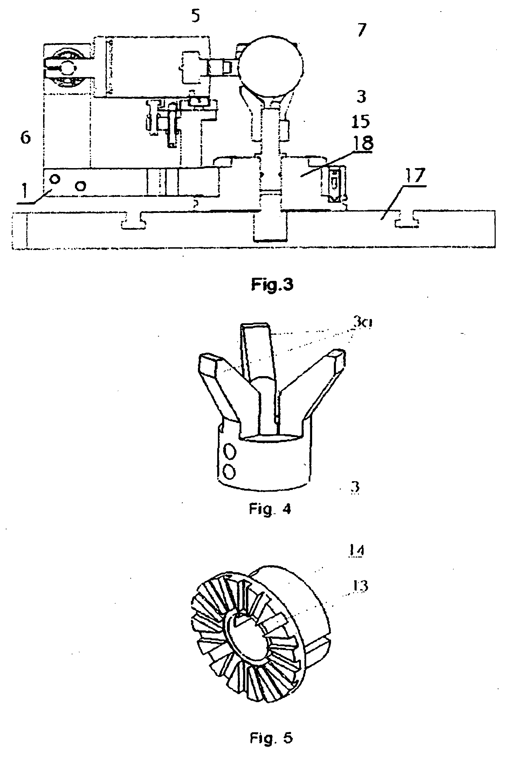

FIG. 3 presents a cross-section perpendicular to the cross-section shown in FIG. 2;
FIG. 4 is a view of the support for supporting a spherical component;
FIG 5 is a view of the angle-adjusting ring;

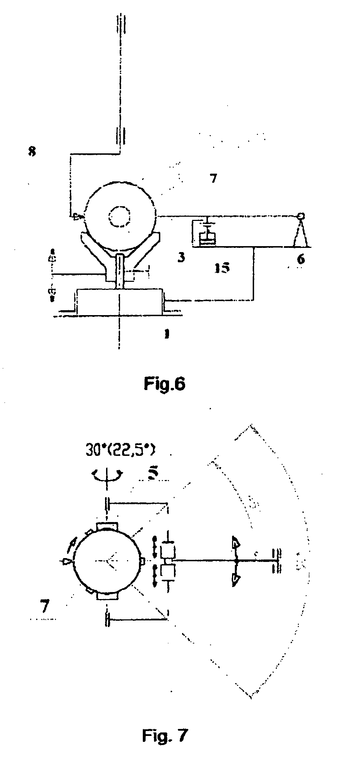

FIG. 6 is a side view of the measurement system;
FIG. 7 is a top view of the measurement range; and

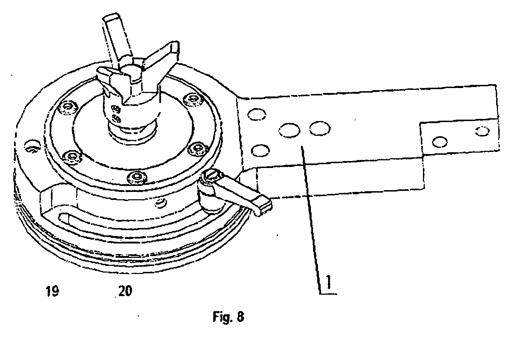

FIG. 8 is a view of the platform of the device.

The device includes a lifting mechanism **6** for lifting a spherical component **7,** fixed to a platform **1** and coupled to a gripping mechanism **5**, which has a pair of jaws **9, 10** with non-slip tips **9a**, **10a**, to grip the spherical component **7** at a certain moment of measurement, while the lifting mechanism **6** lifts the spherical component **7** off a support **3** to enable its rotation with respect to the support **3**. On one of the jaws **10**, there is a rotating mechanism **11** including a pawl module **12,** which cooperates with positioning grooves **13** on the face of an angle-adjusting ring **14**. The angle-adjusting ring **14** with a predetermined, for instance, 22.5 or 30 degree, pitch enables rotation of the spherical component **7** about a predetermined angle. During measurement, the spherical component **7** is placed on the support **3**, mounted on an aligning pin **15**, which is fixed in an aligning ring **18.** The support **3** has three forked two claws **3a** with flat inner surfaces circumscribed about a conical surface. The support **3** is set by sliding on the aligning pin **15**, which enables selection of the axial position according to the diameter of the spherical component **7.** The platform **1** is pivotally fixed on the aligning ring **18** placed on a positioning pin **16** of a measuring table **17.** The device is mounted on the measuring table **17** of an instrument for computer-assisted non-reference roundness measurement. The platform **1** has a radial recess **19** and a channel **20**, wherein the recess **19** and the channel **20** cover one quarter of the circumference of the circular platform **1**. This enables rotation of the device about a certain angle, preferably 90°, and, accordingly, measurement of the spherical component **7** in planes perpendicular to one another to create a regular measurement grid. The spherical component **7**, the positioning pin **16**, the aligning ring **18**, the aligning pin **15**, on which the support **3** is mounted, are in alignment.

The main function of the device is to precisely position a spherical component **7** during measurement so that it is in alignment with the spindle of the instrument for non-reference measurement of roundness errors. The device is mounted on the measuring table **17** of the measuring instrument. The platform **1** can rotate about 90 degrees. The measured spherical component **7** is placed on the tapered support 3, set by sliding on the aligning pin **15** fixed in the aligning ring **18**. After the first measurement of roundness, the spherical component **7** is lifted off the support **3** by means of the pneumatic lifting mechanism **6** coupled to the pneumatic gripping mechanism **5.** Once the spherical component **7** is lifted off the support **3**, it is rotated manually about a pre-determined angle with a rotating mechanism **11** equipped with an angle-adjusting ring **14** with a 22.5 or 30 degree pitch. After this operation, the spherical component **7** is lowered again onto the support **3** and the gripping mechanism **5** is released. At this new position, another measurement of roundness is performed by means of the measuring stylus **8**. The 30 degree pitch on the angle-adjusting ring **14** enables performing six roundness measurements of the spherical component **7** at different angular positions, whereas the 22.5 degree pitch allows eight such measurements. After performing a series of measurements and placing the spherical component **7** back on the support **3**, the platform **1** rotates about 90 degrees. Then, the spherical component **7** is lifted off the support **3**, and the platform **1** rotates about 90 degrees in the opposite direction. At this new position, 90 degrees away from the initial position, another series of six or eight measurements is performed for the spherical component **7**, using the pneumatic gripping mechanism **5** and the manual rotating mechanism **11** with the angle-adjusting ring **14** with a 30 or 22.5 degree pitch, respectively. This procedure allows measuring the spherical component **7** in the meridian directions, with the meridians of the second series of measurement being rotated about 90° with respect to the meridians of the first series.

## Claims

1. A device for positioning a spherical component during measurement of form errors, the device comprising a platform (**1**), pivotally mounted on an aligning ring (**18**), and a lifting mechanism (**6**) for lifting a spherical component (**7**), fixed to the platform (**1**) and coupled to a gripping mechanism (**5**), equipped with a pair of jaws (**9**, **10**), wherein one of the jaws (**10**) has a rotating mechanism (**11**) for positioning the spherical component (**7**) by rotating it about a predetermined angle, and, the device further comprising a support (**3**) on which the spherical component (**7**) can be placed, the support (**3**) being mounted on an aligning pin (**15**) fixed in the aligning ring (**18**).

2. The device, according to Claim 1, wherein the rotating mechanism (**11**) has a pawl module (**12**), which cooperates with positioning grooves (**13**) on the face of an angle-adjusting ring (**14**), and that the grooves (**13**) are made at a pre-determined pitch.

3. The device according to Claim 2, wherein the pitch of the positioning grooves (**13**) of the angle-adjusting ring (**14**) is 30°.

4. The device according to Claim 2, wherein the pitch of the positioning grooves (**13**) of the angle-adjusting ring (**14**) is 22.5°.

5. The device according to Claim 1, wherein the support (**3**) has three forked claws (**3a**) with flat inner surfaces circumscribed about a conical surface.

6. The device, according to Claim 1, wherein the aligning ring (**18**) is mounted on a positioning pin (**16**) of a measuring table (**17**).

7. The device according to Claim 1, wherein the platform (**1**) has a radial recess (**19**) and a channel (**20**), the recess (**19**) and the channel (**20**) covering one quarter of the circumference of the circular platform (**1**).

8. The device according to Claim 1, wherein the spherical component (**7**), the aligning ring (**18**), the aligning pin (**15**), and the positioning pin (**16**) are in alignment.

9. The device according to Claim 1, wherein the jaws (**9**, **10**) are equipped with non-slip tips (**9a**, **10a**).

## Patentansprüche

1. Die Vorrichtung zur Positionierung einer kugelförmigen Komponente während der Messung von Formabweichungen, bestehend aus einer Plattform (1), drehend angebracht an einem fluchtenden Ring (18), dann aus einem Hebemechanismus (6) zum Heben der kugelförmigen Komponente (7), befestigt an der Plattform (1) und gekoppelt mit einem Klemmmechanismus (5), ausgerüstet mit Backen (9, 10), von denen die eine Backe (10) einen Drehmechanismus (11) zur Positionierung der kugelförmigen Komponente (7) durch seine Drehung um einen gewünschten Winkel besitzt und schließlich besteht diese Vorrichtung aus einer Abstützung (3), an der die kugelförmigen Komponente (7) angebracht werden kann, diese Abstützung (3), angebracht an einem fluchtenden Bolzen (15), befestigt in dem fluchtenden Ring (18).

2. Die Vorrichtung, gemäß Anspruch 1, da hat der Drehmechanismus (11) ein Ratschemodul (12), das auf der Frontoberfläche des winkeleinstellenden Ringes (14) mit Positionierungsrillen (13) kooperiert und diese Rillen (13) sind in dem gewünschten Maßstab gefertigt.

3. Die Vorrichtung, gemäß Anspruch 2, da beträgt der Maßstab der Positionierungsrillen (13) des winkeleinstellenden Ringes (14) 30°.

4. Die Vorrichtung, gemäß Anspruch 2, da beträgt der Maßstab der Positionierungsrillen (13) des winkeleinstellenden Ringes (14) 22,5°.

5. Die Vorrichtung, gemäß Anspruch 1, da hat die Abstützung (3) drei gegabelte Klauen (3a) mit flachen Innenoberflächen, beschrieben auf der Kegeloberfläche.

6. Die Vorrichtung, gemäß Anspruch 1, da ist der fluchtenden Ring (18) an einem Positionierungsbolzen (16) des Messungstisches (17) angebracht.

7. Die Vorrichtung, gemäß Anspruch 1, da hat die Plattform (1) eine Radialnische (19) sowie einen Kanal (20), da umfassen die Nische (19) und der Kanal (20) ein Viertel vom Umfang der Kreisplattform (1).

8. Die Vorrichtung, gemäß Anspruch 1, da liegen die kugelförmige Komponente (7), der fluchtende Ring (18), der fluchtende Bolzen (15), an dem die Abstützung (3) befestigt ist sowie der Positionierungsbolzen (16), koaxial.

9. Die Vorrichtung, gemäß Anspruch 1, da sind die Backen (9, 10) mit Antirutschlaschen (9a, 10a) ausgerüstet.

## Revendications

1. Le dispositif pour positionner la position d'un composant sphérique pendant la mesure du contour de la forme, **caractérisé en ce qu'**il a une base (1) fixée à pivot sur le collier fixant (18) coaxialement et qui est muni, sur cette base (1), d'un mécanisme de levage (6) d'un composant sphérique (7) et ce mécanisme (6) est fixé sur la base (1) et accouplée avec le mécanisme de serrage (5) équipé d'une paire de mâchoires (9, 10) où, sur l'une de ces mâchoires (10), on a fixé le mécanisme de rotation (11) permettant d'effectuer une rotation et de fixer la position du composant sphérique (7) à un angle déterminé et ce dispositif est équipé d'un support (3) sur lequel le composant sphérique (7) mesuré peut être placé, le support (3) est monté sur une tige (15) installée dans le collier fixant (18).

2. Le dispositif, selon la revendication 1, **caractérisé en ce que** le mécanisme de rotation (11) possède un cliquet (12) qui coopère avec les rainures de positionnement (13) de l'anneau (14) faites sur sa surface frontale et ces rainures (13) sont faites conformément au pas déterminé.

3. Le dispositif, selon la revendication 2, **caractérisé en ce que** le pas des rainures de positionnement (13) de l'anneau (14) est de 30°.

4. Le dispositif selon la revendication 2, **caractérisé en ce que** le pas des rainures de positionnement (13) de l'anneau (14) est de 22,5°.

5. Le dispositif, selon la revendication 1, **caractérisé en ce que** le support (3) possède trois griffes fourchues (3a) aux surfaces intérieures plates circonscrites à une surface conique.

6. Le dispositif, selon la revendication 1, **caractérisé en ce que** le collier fixant (18) est installé sur la goupille de positionnement (16) de la table de mesure (17).

7. Le dispositif, selon la revendication 1, **caractérisé en ce que** la base (1) a un évidement radial (19) et un canal (20) sous réserve que l'évidement (19) et le canal (20) constituent un quatrième de la circonférence de la base (1) circulaire.

8. Le dispositif, selon la revendication 1, **caractérisé en ce que** la goupille de positionnement (16), le collier fixant (18), la tige (15) sur laquelle on fixe le support (3) et le composant sphérique (7) mesuré sont situés coaxialement

9. Le dispositif, selon la revendication 1, **caractérisé en ce que** les mâchoires (9, 10) sont équipées des éclisses anti-glissantes (9a, 10a).
